**Europäisches Patentamt**

**European Patent Office**

**Office européen des brevets**

(19)

(11) Veröffentlichungsnummer : **0 492 293 B1**

(12) ## EUROPÄISCHE PATENTSCHRIFT

(45) Veröffentlichungstag der Patentschrift :
**02.08.95 Patentblatt 95/31**

(51) Int. Cl.$^6$ : **G02B 6/44**

(21) Anmeldenummer : **91121286.8**

(22) Anmeldetag : **11.12.91**

(54) **Verfahren zur Herstellung eines optischen Kabels.**

(30) Priorität : **21.12.90 DE 4041274**

(43) Veröffentlichungstag der Anmeldung :
**01.07.92 Patentblatt 92/27**

(45) Bekanntmachung des Hinweises auf die
Patenterteilung :
**02.08.95 Patentblatt 95/31**

(84) Benannte Vertragsstaaten :
**AT BE CH DE FR GB IT LI NL SE**

(56) Entgegenhaltungen :
**EP-A- 0 356 786**
**DE-A- 3 808 037**

(56) Entgegenhaltungen :
**TRANSACTIONS OF THE INSTITUTE OF
ELECTRONICS AND COMMUNICATION ENGI-
NEERS OF JAPAN Bd. E63, Nr. 8, August 1980,
TOKYO, JP, SS. 615-616; YAMAUCHI et al.:
'Residual Stresses of Fibres in Tape-Type Optical Cable and Their Reduction'
ELECTRONICS AND COMMUNICATIONS IN
JAPAN Bd. 63, Nr. 8, August 1980, NEW YORK,
US, SS. 69-77; YAMAUCHI: 'Residual Stresses
of Fibres in Tape-Type Optical Cable and Their
Reduction'**

(73) Patentinhaber : **SIEMENS
AKTIENGESELLSCHAFT
Wittelsbacherplatz 2
D-80333 München (DE)**

(72) Erfinder : **Schneider, Reiner, Dipl.-Ing.(FH)
Flurstrasse 32
W-8624 Ebersdorf (DE)**

EP 0 492 293 B1

**Beschreibung**

Die Erfindung betrifft ein Verfahren zum Herstellen eines optischen Kabels, bei dem jeweils eine Gruppe von Lichtwellenleitern zu einem Bändchen mechanisch zusammengefaßt werden und bei der Bildung des Bändchens den Lichtwellenleitern eine Vortorsion aufgepragt wird, wobei anschließend dieses Bändchen einem Aufseilvorgang derart unterworfen wird, daß die dabei auftretende Aufseiltorsion der Vortorsion der Lichtwellenleiter entgegengesetzt gerichtet ist, so daß die resultierende Torsion der Lichtwellenleiter im fertigen Kabel verringert wird.

Ein Verfahren dieser Art ist aus "ELECTRONICS AND COMMUNICATIONS IN JAPAN" Vol. 63, No. 8, 1980, New York, Seiten 69-77 bekannt. Die Vortorsion wird dabei so erzeugt, daß die Vorratsspulen jeweils in einem Joch gehalten sind, wobei das Joch jeweils um eine Achse rotiert, die senkrecht zur Achse der Vorratsspule verläuft. Der Aufwand für derartige rotierende Joche ist relativ hoch.

Aus der DE-OS 38 08 037 (GR 88 P 1124 DE) ist es bekannt, daß Lichtwellenleiter über eine entsprechende Führungseinrichtung in die Kammern von Kammerkabeln eingelegt werden können. Hierzu wird das die Kammern aufweisende Kernelement gedreht und es wird eine feststehende Einlegeeinrichtung verwendet. Im Rahmen der kinematischen Umkehrung ist es natürlich auch möglich mit einer rotierenden Einlegevorrichtung zu arbeiten und das Kernelement nur in axialer Richtung zu bewegen, nicht aber zu verdrehen.

Der vorliegenden Erfindung liegt die Aufgabe zugrunde, in einfacher Weise die Torsionsbeanspruchungen der Lichtwellenleiter innerhalb des Bändchens zu verringern. Diese Aufgabe wird bei einem Verfahren der eingangs genannten Art gemäß der Erfindung dadurch gelöst, daß eine Vortorsion der Lichtwellenleiter durch Überkopfabzug von zugehörigen Vorratsspulen erzeugt wird und daß durch Antreiben der Vorratsspulen zur Drehung derselben um die Spulenachse eine Veränderung der Größe dieser Vortorsion bewirkt wird.

Der Überkopfabzug erzeugt in einfacher Weise bereits eine (erste) Vortorsion, wobei diese zusätzlich durch das Drehen der Ablaufspulen so verändert wird, daß die gewünschte (resultierende) Vortorsion erhalten wird. Durch eine Drehung der Ablaufspulen in der Abzugsrichtung wird eine Vergrößerung der ersten, bei Überkopfabzug erhaltenen Vortorsion und durch eine Drehung entgegen der Ablaufrichtung eine Verkleinerung der ersten Vortorsion bewirkt.

Die Erfindung betrifft weiterhin eine Einrichtung zur Durchführung des erfindungsgemäßen Verfahrens unter Verwendung einer Beschichtungseinrichtung für die vortordierten Lichtwellenleiter und einer Verseileinrichtung der die Lichtwellenleiterbändchen zugeführt sind, welche dadurch gekennzeichnet ist, daß die Lichtwellenleiter eines Bändchens auf drehbaren Vorratsspulen derart angeordnet sind, daß sie überkopf abziehbar sind, und daß die Vorratsspulen beweglich gelagert sind und ihnen jeweils ein regelbarer Antriebsmotor zum Drehen der Vorratsspulen um ihre Spulenachsen zugeordnet ist.

Die Erfindung und ihre Weiterbildungen werden nachfolgend anhand von Zeichnungen näher erläutert. Es zeigen:

Fig. 1      im Querschnitt den Aufbau eines Lichtwellenleiter-Bändchens,

Fig. 2      in perspektivischer Darstellung ein optisches Kabel mit entsprechend aufgeseilten Bändchen,

Fig. 3      eine Einrichtung zur Durchführung des erfindungsgemäßen Verfahrens und

Fig. 4      eine Skizze zur Erläuterung der Abschlags-Torsion.

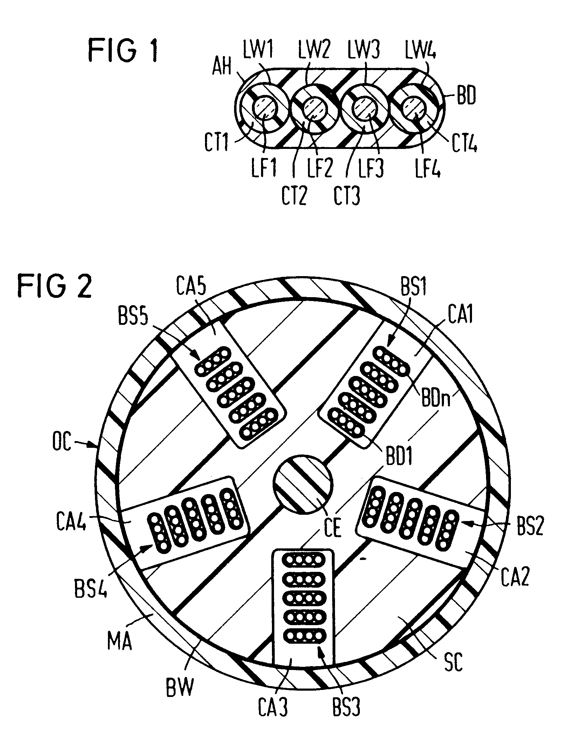

In Fig. 1 sind vier Lichtleitfasern LF1-LF4 dargestellt, die außen mit mindestens einer entsprechenden Schutzschicht (Coating) CT1-CT4 umgeben sind. Die so erhaltenen vier Lichtwellenleiter LW1-LW4 werden in bekannter Weise in eine gemeinsame Außenhülle AH (z.B. aus UV-vernetztem Polyurethanacrylat) eingebracht, die z.B. aus einem extrudierten Kunststoffmaterial, einem Schmelzkleber oder dergleichen bestehen kann. Das so erhaltene Bändchen BD hat eine etwa rechteckförmige Gestalt mit abgerundeten Kanten. Die Zahl der innerhalb eines Bändchens BD vorhandenen Lichtwellenleiter kann natürlich je nach den jeweiligen Erfordernissen unterschiedlich gewählt sein.

In Fig. 2 ist im Querschnitt ein sogenanntes "Kammerkabel" dargestellt, d.h. eine Anordnung, die ein Kernelement SC aufweist, in dem verschiedene radial angeordnete Kammern CA1-CA5 angeordnet sind. Im Zentrum des Kernelementes SC ist ein Zug- und/oder Stützelement CE vorgesehen. Innerhalb der sich radial nach außen öffnenden Kammern CA sind Bändchenstapel BS1-BS5 angeordnet, welche aus jeweils n (im vorliegenden Beispiel ist n = 5 gewählt) Einzelbändchen entsprechend Fig. 1 zusammengesetzt sind. Diese Bändchen sind bei der Kammer CA1 mit BD1-BDn bezeichnet. Die Bändchen selbst verlaufen etwa tangential zur Mittelachse des Kabels und werden beim Einlegen in die helixförmig den Kern umschließenden Kammern CA1-CA5 durch die damit verbundene schraubenlinienförmigen Führung einer Torsion (Aufseiltorsion) unterworfen.

Die Kammern CA1-CA5 sind außen mit einer Bewicklung oder Bespinnung BS verschlossen und anschließend ist ein - gegebenenfalls mehrschichtig aufgebauter - Außenmantel MA angebracht.

Der Verseilvorgang bewirkt natürlich auch dann eine Torsion, wenn die verschiedenen Bändchenstapel nicht in vorgegebene Kammern eingelegt werden, sondern z.B. in einer losen Konfiguration um einen Kern herum verseilt werden. Ebenso tritt natürlich eine Verseiltorsion auf, wenn die einzelnen Bändchenstapel BS1-BS5 - vorzugsweise jeweils mit einer gemeinsamen äußeren Umhüllung umgeben - als Bündel lageweise zu einer Kabelseele verseilt werden. In all diesen Fällen ist mit dem Verseilvorgang zwingend eine Verseiltorsion für die einzelnen Bändchen verbunden.

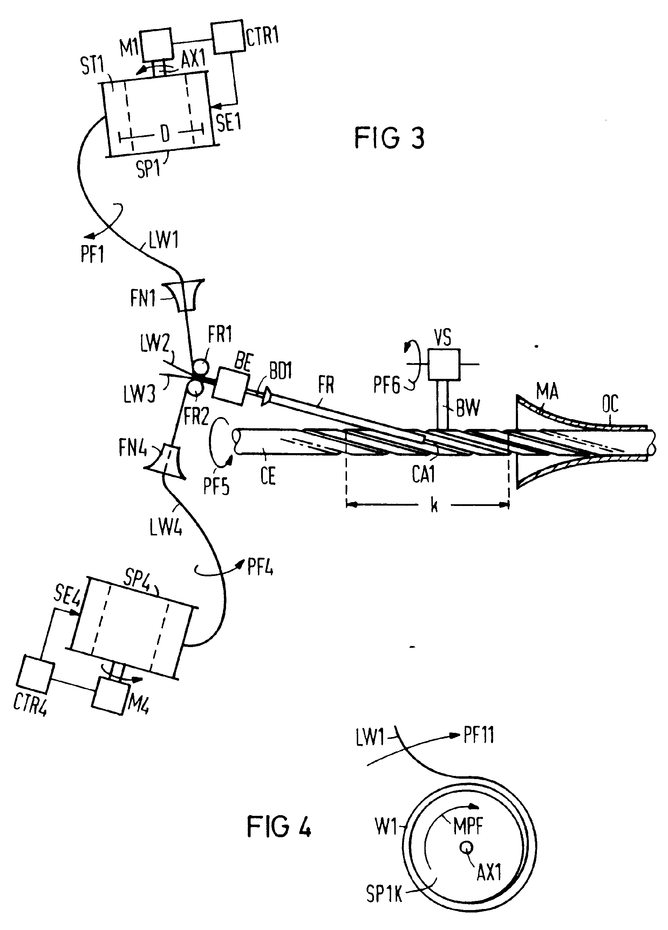

Bei der Einrichtung nach Fig. 3 sind nur zwei der vier zur Herstellung eines Bändchens BD nach Fig. 1 benötigten Vorratsspulen dargestellt und mit SP1 und SP4 bezeichnet. Der Abschlag der Lichtwellenleiter LW1-LW4 von den entsprechenden Vorratsspulen SP1-SP4 erfolgt überkopf, was zur Folge hat, daß je Windung eine Torsion von einmal 360° als Vortorsion auf die Lichtwellenleiter ausgeübt wird. Der Umfang dieser Vortorsion kann durch ein entsprechendes Drehen der Ablaufspulen noch vergrößert werden, wobei durch eine Drehung der Ablaufspulen SP1-SP4 in der Abzugsrichtung eine Vergrößerung der Torsion und durch eine Drehung entgegen der Ablaufrichtung eine Verkleinerung der beim Überkopfabzug entstehenden Vortorsion bewirkt wird. Zur Einstellung dieser Vortorsion auf einen genau gewünschten Wert sind die Spulen SP1-SP4 beweglich gelagert und weisen Antriebsmotoren M1-M4 auf, die über Steuereinrichtungen CTR1 in ihrer Drehzahl einstellbar sind, um die gewünschten genauen Werte zu erhalten.

Da die Länge innerhalb der eine Vortorsion um 360° eintritt genau einer Windung jeweils z.B. des Lichtwellenleiters LW1 entspricht, tritt mit zunehmender Entlehrung der Vorratsspule z.B. SP1 die Vortorsion um 360° bei jeweils sich verkürzende Umfangslängen bezogen. Falls erwünscht kann mittels eines Sensors SE1 die Stapelhöhe ST1, (wie z.B. bei der Spule SP1 dargestellt) fortlaufend abgetastet werden und diese Information mit in die Steuerung mittels der Steuereinrichtung CTR1 des Motors M1 einbezogen werden.

Die Lichtwellenleiter LW1-LW4 werden unter Beibehaltung ihrer durch die Pfeile PF1-PF4 angedeuteten Vortorsion ggf. über Umlenkrollen oder Tänzer (hier nicht dargestellt) zur Erzeugung einer bändchenartigen Struktur zunächst in eine parallel zueinander verlaufende Lage geführt. Hierzu laufen sie über Führungstrichter FN1-FN4 zwischen zwei Führungsrollen FR1 und FR2 ein, die z.B. entsprechende Nuten zur Führung der Lichtwellenleiter LW1-LW4 aufweisen können und dadurch deren Parallelität sichern. Die Lichtwellenleiter LW1-LW4 gelangen in eine Beschichtungseinrichtung BE, durch die auf die vier Lichtwellenleiter LW1-LW4 die in Fig. 1 mit AH bezeichnete Außenschicht aufgebracht wird. Mittels geeigneter Vorschub- oder Transporteinrichtungen wird das so erzeugte Bändchen, z.B. BD1 nach Fig. 2 einem Führungsrohr FR zugeführt, dessen vorderes Ende in der entsprechenden Kammer, im vorliegenden Beispiel also der Kammer CA1 des Kernelementes CE endet. Das Kernelement CE rotiert, wie durch den Pfeil PF5 angedeutet um seine Längsachse, so daß fortlaufend der schraubenlinienförmige Einzug des Bändchens BD1 erfolgt.

In Wirklichkeit sind natürlich entsprechend der Darstellung von Fig. 2 nicht nur das Bändchen BD1, sondern alle Bändchen BD1-BDn durch das Führungsrohr FR in die Kammer CA1 einzuführen. Die hierzu notwendigen übrigen Einrichtungen sind aber zur Vereinfachung der Darstellung hier weggelassen. Anschließend erfolgt die Aufbringung der Bewicklung BW, die von einer Vorratsspule VS abgezogen wird und die Kammern CA1-CA5 des Kernelementes CE nach außen verschließt. Nach Aufbringung des Mantels MA liegt das fertige optische Kabel OC vor.

Es ist auch möglich, die durch die Beschichtungseinrichtung BE gewonnenen Bändchen, z.B. das Bändchen BD1 zunächst auf eine Trommel aufzuwickeln und anschließend von dieser Trommel abzuziehen und über das Führungsrohr FR den Legevorgang, d.h. das Einlegen in die Kammer CA1 durchzuführen. Wie auch immer der Ablauf im einzelnen gestaltet wird, auf jeden Fall weisen die Lichtwellenleiter LW1-LW4 des Bändchens BD1 beim Einlauf in die Kammer CA1 noch die durch den Überkopfabzug erhaltene Vortorsion auf. Diese Vortorsion wird nun richtungsmäßig so gewählt, daß ihr die durch das schraubenlinienförmige Einlegen in die Kammern CA1-CA5 bewirkte Verseiltorsion entgegengesetzt gerichtet ist. Wenn also der Überkopfabzug so vorgenommen wurde, daß bei den Lichtwellenleitern eine Verdrehung und damit eine Torsion im Uhrzeigersinn erfolgte, dann muß der Aufseilvorgang bzw. der Einlegevorgang in die Kammern CA1-CA5 so vorgenommen werden, daß dieser eine Torsion entgegengesetzt dem Uhrzeigersinn für das Bändchen, z.B. BD1 und damit auch für die Lichtwellenleiter bewirkt. Die im resultierenden fertigen Kabel somit erhaltene und auf die Lichtwellenleiter wirkende Torsion ist somit auf jeden Fall geringer, weil beide Torsionen (Vortorsion und Aufseiltorsion) gegeneinander gerichtet sind und sich somit ein geringerer resultierender Wert ergibt.

Im allgemeinen ist davon auszugehen, daß die "Schlaglänge der Kammern", d.h. die Länge k der Schraubenlinie bei einer vollen Umschlingung der Kammern im Kernelement CE durch konstruktive Forderungen an das Kabel vorgegeben ist und damit nicht oder nur im sehr geringen Umfang geändert werden kann. Dagegen ist das Maß der Vortorsion, welches z.B. bei dem Überkopfabzug von den Vorratsspulen SP1-SP4 eintritt, mittels der Motoren M1-M4 veränderbar, so daß sogar eine Total-Kompensation möglich ist, d.h. ein Abgleich auf eine resultierende Torsion = 0. Dies wird im einzelnen anhand von Zahlenbeispielen nachfolgend näher erläutert.

Beispiel 1a:

Steigung (Schlaglänge) k der Kammern CA1-CA5 = 400 mm Wickeldurchmesser der Abwickelspule SP1 (Mittelwert) = 200 mm Gewünschte Torsion des Lichtwellenleiters LW1 = Steigung (Schlaglänge) der Kammern

$$CA1 - CA5 = \frac{1\ \text{Umdrehung}}{400\ \text{mm}}$$

Bei stehender Vorratsspule SP1 (d.h. Motor M1 nicht wirksam) wird durch Überkopfabzug eine Umdrehung auf $q = 200 \cdot \pi = 628$ mm Länge aufgebracht (Torsion = 360°), wobei der mittlere Durchmesser des Wickelstapels ST1 bei der Spule SP1 D = 200 mm beträgt. Eine ideale Kompensation wäre möglich, wenn die Steigung k der Kammern gerade 628 mm betragen würde. Da dieser Wert k jedoch bei nur 400 mm liegt und normalerweise auch nicht verändert werden kann, ist ohne eine zusätzliche Maßnahme bereits eine Verringerung der sonst sich ergebenden Torsion von k = 360°/400 mm auf den Wert $360(-1 + \frac{628}{400}) = 0{,}57 \cdot 360° = 205°$ erreicht, also praktisch eine Halbierung. Allgemein gilt mit k als Steigung der Kammern und D als mittlerer Durchmesser des Spulenstapels ST1

$$\varphi k = \frac{360°}{k} \qquad \text{(Grad/Länge)}$$

$$\varphi a = \frac{360°}{D} \qquad \text{(Grad/Länge)}$$

$$\varphi x = \varphi k - \varphi a \qquad \text{(Grad/Länge)}$$

Beispiel 1b:

Durch eine zusätzliche Verdrehung mittels des Motors M1 um den Wert $\varphi m$ (Grad/Länge) kann der Drall und damit die Vortorsion auf den Lichtwellenleiter LW1 so weit vergrößert werden, derart, daß je 400 mm abgezogener Länge des Lichtwellenleiters LW1 eine Vortorsion um 360° erreicht wird. Die erforderliche Drehung der Spule SP1 in der Ablaufrichtung wird folgendermaßen berechnet:

$$\varphi x = 0 = \varphi k - \varphi a \pm \varphi m$$

Erforderliche Drehung: k = 360°/400 mm = 0,9°/mm

Drehung durch Überkopfabzug $\varphi a = \frac{360°}{D \cdot \pi} = 0{,}57°/\text{mm}$

Drehung durch Motor M1 $\varphi m = 0{,}9 - 0{,}57°/\text{mm} = 0{,}33°/\text{mm}$

Für eine vollständige Kompensation muß die erforderliche Zusatzdrehung in der Abwickelrichtung also für die Spule SP1 so gewählt werden zu $\varphi m = 0{,}33°/\text{mm}$.

Dieser Wert bezieht sich auf eine Schlaglänge oder Steigungslänge k der Kammern von k = 400 mm, so daß pro Meter abgezogenem Lichtwellenleiter LW1 ein zusätzliche Verdrehung von 330° mittels des Motors M1 erfolgen muß, um eine exakte Kompensation der Aufseiltorsion zu erreichen oder anders ausgedrückt, um zu erreichen, daß im fertigen Kabel OC die Lichtwellenleiter innerhalb der Bändchen eine resultierende Torsion mit dem Wert O aufweisen. Im allgemeinen ist eine Kompensation auf einen Wert von genau 0° nicht erforderlich; Restwerte bis zu 0,2°/mm können im allgemeinen ohne Beeinträchtigung der Lichtwellenleiter toleriert werden.

Bei einer angenommenen Fertigungsgeschwindigkeit von 100m/min wird die Spule SP1 entgegengesetzt der Abschlagrichtung mit einer Drehzahl $\frac{330}{360} \cdot 100 = 91{,}7$ U/$_{\text{min}}$ angetrieben, um die gewünschte exakte Kompensation und eine resultierende Torsion O für die Lichtwellenleiter LW1-LW4 innerhalb eines Bändchens zu erreichen. Dies ist schematisch in Fig. 4 dargestellt, wo auf dem Kern SP1K der Spule SP1 die Wicklungen (angedeutet durch die Wicklung W1) entgegengesetzt dem Uhrzeigersinn aufgewickelt sind und der Überkopfabschlag, wie durch den Pfeil PF11 angedeutet im Uhrzeigersinn erfolgt. Demgemäß muß zur Vergrößerung der Abschlagtorsion die Drehung der Achse AX1 durch den Motor M1 (angedeutet durch den Pfeil MPF) in der gleichen Richtung wie der Abschlag, also ebenfalls in Richtung des Pfeiles PF11 erfolgen.

Beispiel 2:

Daß die Verhältnisse auch umgekehrt liegen können wie im vorliegenden Beispiel angegeben, wird aus dem nachfolgenden Beispiel ersichtlich, bei dem folgende Voraussetzungen angenommen sind:
Steigung k der Kammern CA1-CA5k = 700 mm
(mittlerer) Wickeldurchmesser D der Spule SP1 = 150 mm

Gewünschte gesamte Vortorsion = $\varphi k = \dfrac{360°}{700\ mm} = 0{,}51\ °/mm.$

Durch den Überkopfabzug von der Spule SP1 ergibt sich eine Torsion $\varphi a = \dfrac{360°}{D \cdot \pi} = 0{,}76°/mm.$ Die Vortorsion $\varphi a$ allein durch den Überkopfabzug wäre also bereits zu groß.

Die erforderliche Korrektur $\varphi m$ beträgt

$$\varphi m = 0{,}51 - 0{,}76 = -\ 0{,}25°/mm.$$

Das bedeutet, daß die Spule SP1 entgegen der Abschlagrichtung um 0,25°/mm gedreht werden muß. Pro 1 Meter Ablauflänge des Lichtwellenleiters LW1 ist die Spule SP1 somit entgegen der Abschlagrichtung um 250° zu drehen, wenn eine exakte Kompensation der Torsion im fertigen Kabel durchgeführt werden soll.

**Patentansprüche**

1. Verfahren zum Herstellen eines optischen Kabels (OC), bei dem jeweils eine Gruppe von Lichtwellenleitern (LW1-LW4) zu einem Bändchen (BD) mechanisch zusammengefaßt werden und bei der Bildung des Bändchens (BD) den Lichtwellenleitern (LW1-LW4) eine Vortorsion aufgeprägt wird, wobei anschließend dieses Bändchen einem Aufseilvorgang derart unterworfen wird, daß die dabei auftretende Aufseiltorsion der Vortorsion der Lichtwellenleiter entgegengesetzt gerichtet ist, so daß die resultierende Torsion der Lichtwellenleiter (LW1-LW4) im fertigen Kabel (OC) verringert wird,
   **dadurch gekennzeichnet,**
   daß die Vortorsion der Lichtwellenleiter durch Überkopfabzug von zugehörigen Vorratsspulen (Sp1-Sp4) erzeugt wird und daß durch Antreiben der Vorratsspulen (Sp1-Sp4) zur Drehung derselben um die Spulenachse eine Veränderung der Größe dieser Vortorsion bewirkt wird.

2. Verfahren nach einem der vorhergehenden Ansprüche,
   **dadurch gekennzeichnet,**
   daß die Vortorsion so gewählt wird, daß die resultierende Torsion unter 0,2°/mm liegt.

3. Verfahren nach einem der vorhergehenden Ansprüche,
   **dadurch gekennzeichnet,**
   daß mehrere Bändchen, vorzugsweise gestapelt, verseilt werden.

4. Vorrichtung zur Durchführung des Verfahren nach einem der vorhergehenden Ansprüche, mit einer Beschichtungseinrichtung für die vortordierten Lichtwellenleiter und einer Verseileinrichtung, der die Lichtwellenleiterbändchen zugeführt sind,
   **dadurch gekennzeichnet,**
   daß die Lichtwellenleiter eines Bändchens auf drehbaren Vorratsspulen derart angeordnet sind, daß sie überkopf abziehbar sind, und daß die Vorratsspulen beweglich gelagert sind und ihnen jeweils ein regelbarer Antriebsmotor (M1-M4) zum Drehen der Vorratsspulen um ihre Spulenachsen zugeordnet ist.

**Claims**

1. Method for producing an optical cable (OC), in which in each case one group of optical fibres (LW1-LW4) are mechanically combined to form a ribbon (BD) and, in forming the ribbon (BD), a pre-torsion is impressed on the optical fibres (LW1-LW4), the said ribbon being subsequently subjected to a stranding process in such a way that the stranding torsion occurring in so doing is directed oppositely to the pre-torsion of the optical fibres, with the result that the resulting torsion of the optical fibres (LW1-LW4) in the finished cable (OC) is reduced, characterized in that the pre-torsion of the optical fibres is produced by means of drawing off overhead from associated supply coils (Sp1-Sp4) and in that, by driving the supply coils (Sp1-Sp4) for rotating the same about the coil axis, a variation in the magnitude of this pre-torsion is effected.

2. Method according to Claim 1, characterized in that the pre-torsion is chosen such that the resulting torsion lies below 0.2°/mm.

3. Method according to one of the preceding claims, characterized in that a plurality of ribbons, preferably stacked, are stranded.

4. Device for carrying out the method according to one of the preceding claims, having a coating device for the pre-torsioned optical fibres and a stranding device, to which the optical fibre ribbons are fed, characterized in that the optical fibres of a ribbon are arranged on rotatable supply coils in such a manner that they can be drawn off overhead, and in that the supply coils are supported movably and a controllable drive motor (M1-M4) for rotating the supply coils about their coil axes is allocated in each case to them.

## Revendications

1. Procédé de fabrication d'un câble optique (OC), dans lequel on rassemble mécaniquement un groupe de guides d'ondes lumineuses (LW1 à LW4) en une petite bande (BD) et, lors de la formation de la petite bande (BD), on imprime une torsion préalable aux guides d'ondes lumineuses (LW1 à LW4), et ensuite on soumet cette petite bande à une opération de câblage de telle sorte que la torsion de câblage, qui apparaît, soit dirigée en sens inverse de la torsion préalable des guides d'ondes lumineuses de manière à réduire la torsion résultante des guides d'ondes lumineuses (LW1 à LW4) dans le câble fini (OC), caractérisé en ce qu'il consiste à produire la torsion préalable des guides d'ondes lumineuses par un tirage à la défilée de bobines débitrices associées (Sp1 à Sp4) et à provoquer une modification de la valeur de cette torsion préalable en entraînant les bobines débitrices (Sp1 à Sp4) pour les faire tourner autour de leurs axes.

2. Procédé suivant l'une des revendications précédentes, caractérisé en ce qu'on choisit la torsion préalable de manière que la torsion résultante soit inférieure à 0,2°/mm.

3. Procédé suivant l'une des revendications précédentes, caractérisé en ce qu'on réunit par câblage plusieurs petites bandes, de préférence à l'état empilé.

4. Dispositif pour la mise en oeuvre du procédé suivant l'une des revendications précédentes, comportant un dispositif d'enduction pour les guides d'ondes lumineuses soumises à une torsion préalable, et un dispositif de câblage, auquel sont envoyées les petites bandes des guides d'ondes lumineuses, caractérisé par le fait que les guides d'ondes lumineuses d'une petite bande sont disposés sur des bobines débitrices rotatives de telle sorte qu'ils peuvent être retirés à la défilée, et que les bobines débitrices sont montées mobiles et que respectivement un moteur d'entraînement réglable (M1 à M4) leur est associé pour faire tourner les bobines débitrices autour de leurs axes.

FIG 1

FIG 2

FIG 3

FIG 4